# EUROPÄISCHE PATENTSCHRIFT

(11) **EP 3 591 281 B1**
(45) Veröffentlichungstag und Bekanntmachung des Hinweises auf die Patenterteilung: **23.12.2020**
(21) Anmeldenummer: 19184357.2
(22) Anmeldetag: 04.07.2019
(51) Int. Cl.: F21K 9/61, F21S 6/00, F21V 8/00, F21V 14/02, F21Y 103/10, F21Y 115/10, F21W 131/402

(54) **INNENRAUMLEUCHTE**
INTERIOR LIGHT
LUMINAIRE DE L'HABITACLE

(30) Priorität: 04.07.2018 DE 102018116230
(43) Veröffentlichungstag der Anmeldung: 08.01.2020
(73) Patentinhaber: Herbert Waldmann GmbH & Co. KG, 78056 Villingen-Schwenningen (DE)
(72) Erfinder: Nevoigt, Jürgen, 78224 Singen (DE)
(74) Vertreter: Westphal, Mussgnug & Partner Patentanwälte mbB

(56) Entgegenhaltungen:
- EP-A1- 2 469 313
- EP-A1- 2 527 891
- EP-A1- 3 176 498
- DE-A1-102012 019 522
- US-A1- 2013 336 001

## Beschreibung

Die vorliegende Erfindung betrifft eine Innenraumleuchte mit einem Gehäuse und wenigstens einer Öffnung auf der Unterseite zum Abstrahlen von direktem Licht und wenigstens einer Öffnung auf der Oberseite zum Abstrahlen von indirektem Licht mit den Merkmalen des Patentanspruchs 1.

Innenraumleuchten sind in unterschiedlichen Ausgestaltungen aus dem Stand der Technik vorbekannt und sind typischerweise flach aufgebaute Steh-, Pendelleuchten oder dergleichen, die zur Beleuchtung eines Innenraums, insbesondere eines Büros verwendet werden. Derartige Innenraumleuchten sind oftmals dazu eingerichtet, das abgestrahlte Licht einerseits als Direktanteil und andererseits als Indirektanteil abzustrahlen, um eine bestmögliche Beleuchtung des Innenraums zu realisieren. Insbesondere haben sich im Stand der Technik besonders flach aufgebaute Innenraumleuchten für die Realisierung von anspruchsvollen Designs bewährt, bei denen oftmals die sogenannte Edgelight-Technologie angewendet wird. Dabei wird das Licht eines LED-Linearmoduls oder mehrerer LED-Linearmodule, welche aus einer Vielzahl von in einer Reihe angeordneten LEDs gebildet sind, in eine oder mehrere Seitenkanten einer plattenförmigen Lichtleiterplatte eingekoppelt, über eine Totalreflexion an den Grenzflächen der Lichtleiterplatte weitergeleitet und über die Auskopplungsstruktur abgestrahlt. Die Auskopplungsstruktur ist oftmals eine eingeprägte geometrisch definierte Struktur, die gezielt eine Unterbrechung der Totalreflexion in der Lichtleiterplatte herbeiführt, so dass das Licht an diesen Strukturen entweder unmittelbar, in einem Indirektanteil aus der Lichtleiterplatte austritt oder der Winkel des totalreflektierten Lichts durch die Auskopplungsstruktur derart verändert wird, dass das Licht auf der gegenüberliegenden Grenzfläche aus der Lichtleiterplatte austritt. Aufgrund der Veränderung des Winkels des reflektierten Lichts innerhalb der Lichtleiterplatte wird auf der gegenüberliegenden Grenzfläche die Bedingung der Totalreflexion nicht mehr erfüllt, wodurch das Licht auf der anderen Seite der Lichtleiterplatte bzw. der Innenraumleuchte in einem Direktanteil austritt.

Die Druckschriften DE 10 : 2012 019 522 A1, EP 2 527 891 A1 und EP 2 469 313 A1 bilden weiteren Stand der Technik.

Als nachteilig an diesem Stand der Technik hat sich erwiesen, dass der Anteil des indirekt in den Innenraum abgestrahlten Lichts, nachfolgend Indirektanteil genannt, und der Anteil des direkt in den Innenraum abgestrahlten Lichts, nachfolgend Direktanteil genannt, durch eine Auslegung der Auskopplungsstruktur nur bedingt und aufwändig zu realisieren ist. Die Lichteinkopplung der LEDs erfolgt mit einer sogenannten Lam-bert'schen Abstrahlcharakteristik, d. h., dass das Licht einer jeden LED des LED-Linearmoduls nahezu in alle Raumrichtungen gleichmäßig abgestrahlt wird. Durch die Einkopplung unmittelbar an der Seitenkante der Lichtleiterplatte ergibt sich eine Lichtbrechung durch das optisch dichtere Material der Lichtleiterplatte, welches die Strahlendivergenz innerhalb der Lichtleiterplatte verringert. Ein Ansatz, der im Stand der Technik verfolgt wird um den Indirektanteil zu erhöhen, ist, anhand von komplexen aufwändigen Strukturen an den Seitenkanten der Lichtleiterplatten die Lichtbrechung beim Einkoppeln in die Lichtleiterplatte mit dem Ziel einer weiteren Einengung der Strahlendivergenz zu beeinflussen. Jedoch ist dies mit erheblichen Kosten verbunden.

Es ist daher die Aufgabe der vorliegenden Erfindung, eine Innenraumleuchte bereitzustellen, insbesondere eine Büroleuchte, die es ermöglicht, den Direktanteil des abgestrahlten Lichts der Innenraumleuchte zu reduzieren und den Indirektanteil des abgestrahlten Lichts zu erhöhen, um die mittlere Blendleuchtdichte der Innenraumleuchte zu reduzieren, ohne die gesamte Lichtausbeute zu verringern und/oder eine weitere Lichtquelle für den Indirektanteil und/oder Direktanteil verwenden zu müssen.

Die Lösung dieser Aufgaben erfolgt durch eine Innenraumleuchte mit den Merkmalen des Patentanspruchs 1.

Weitere vorteilhafte Ausgestaltungen sind Bestandteil der Unteransprüche.

Die erfindungsgemäße Innenraumleuchte, insbesondere Büroleuchte umfasst ein Gehäuse mit einer Ausnehmung in der wenigstens ein LED-Linearmodul mit einer Hauptabstrahlrichtung und wenigstens eine Lichtleiterplatte angeordnet sind. Die Lichtleiterplatte weist wenigstens eine Seitenkante und zwei Grenzflächen auf, wobei das LED-Linearmodul eingerichtet ist, Licht in die Ausnehmung abzustrahlen, so dass anteilig das Licht auf die Lichtleiterplatte trifft. Darüber hinaus umfasst die Ausnehmung eine erste lichtdurchlässige Öffnung zur indirekten Beleuchtung auf einer Oberseite und eine zweite lichtdurchlässige Öffnung zur direkten Beleuchtung auf einer Unterseite, wobei die Lichtleiterplatte in der Ausnehmung zwischen der ersten Öffnung und der zweiten Öffnung in einer ersten Ebene angeordnet ist, und wobei das wenigstens eine LED-Linearmodul beabstandet zu der wenigstens einen Seitenkante der Lichtleiterplatte angeordnet ist und das Licht in die Ausnehmung abstrahlt. Die erste Ebene ist bevorzugt parallel zu der Oberseite und/oder Unterseite ausgerichtet.

Im Gegensatz zu den aus dem Stand der Technik bekannten Innenraumleuchten erfolgt eine Einkopplung des von dem LED-Linearmodul abgestrahlten Lichts nicht mittig und unmittelbar in der ersten Ebene der Lichtleiterplatte, sondern das LED-Linearmodul ist beabstandet zu der Lichtleiterplatte angeordnet, wodurch das von dem LED-Linearmodul abgestrahlte Licht anteilig an der Lichtleiterplatte vorbei als Indirektanteil abgestrahlt werden kann. Der Abstand sowohl in der ersten Ebene zu der Seitenkante als auch der Abstand senkrecht zu der ersten Ebene und/oder der Winkel zwischen der Lichtleiterplatte und dem LED-Linearmodul kann bzw. können den Direktanteil des durch die Lichtleiterplatte direkt in den Innenraum abgestrahlten Lichts und den Indirektanteil bestimmen.

Das wenigstens eine LED-Linearmodul umfasst eine Vielzahl von einzelnen LEDs, die bevorzugt äquidistant und weiter bevorzugt entlang einer Achse parallel zu der ersten Ebene angeordnet sind. Derartige LED-Linearmodule sind bekannt für ihre hohe Lichtausbeute und werden dem Anspruch einer energieeffizienten Beleuchtung eines Innenraums, insbesondere eines Büros, gerecht.

Es ist vorteilhaft, wenn das wenigstens eine LED-Linearmodul in einer zweiten Ebene angeordnet ist und wenn die zweite Ebene parallel und beabstandet, oder in einem Winkel zu der ersten Ebene angeordnet ist. Durch den Abstand zwischen der ersten Ebene und der zweiten Ebene kann sichergestellt werden, dass anteilig das von dem LED-Linearmodul abgestrahlte Licht nicht in die Lichtleiterplatte eingekoppelt wird und als Indirektanteil, insbesondere unmittelbar abgestrahlt werden kann.

Weiterhin ist es vorteilhaft, wenn der Abstand zwischen der zweiten Ebene und der Oberseite kleiner ist als der Abstand zwischen der ersten Ebene und der Oberseite, wodurch weiter bevorzugt das LED-Linearmodul auf der der Oberseite zugewandten Seite beabstandet zu der ersten Ebene angeordnet ist. Der Abstand zwischen der ersten Ebene und der zweiten Ebene bestimmt den Anteil des von dem LED-Linearmodul abgestrahlten indirekten Lichts, wobei anteilig das von dem LED-Linearmodul abgestrahlte Licht unmittelbar als Indirektanteil abgestrahlt wird.

Eine weitere vorteilhafte Ausgestaltung der vorliegenden Erfindung sieht vor, dass die Lichtleiterplatte eine Auskopplungsstruktur umfasst. Die Auskopplungsstruktur ist bevorzugt eine eingeprägte geometrisch definierte Struktur, die weiter bevorzugt beispielsweise mittels Laserbearbeitung auf der der Oberseite und/oder auf der der Unterseite zugewandten Seite in die Lichtleiterplatte eingebracht wird. Die Auskopplungsstruktur umfasst kleine Streuzentren, die das auftreffende Licht zerstreut reflektieren bzw. brechen.

Auch ist es vorteilhaft, wenn zwischen dem LED-Linearmodul und der Lichtleiterplatte in dem Gehäuse ein Raum angeordnet ist, und der Raum wenigstens in einer Ebene parallel zu der ersten Ebene einen Reflektor aufweist. Demnach ist das LED-Linearmodul in der ersten Ebene (projiziert) beabstandet zu der Seitenkante der Lichtleiterplatte angeordnet, wobei das nach der Lambert'schen Abstrahlcharakteristik emittierte Licht der jeweiligen LEDs in dem Raum in dem Gehäuse anteilig auf den Reflektor auftreten kann und, insbesondere bevorzugt diffus, das Licht in den Raum reflektiert. Das von dem LED-Linearmodul abgestrahlte Licht kann somit einerseits anteilig als Indirektanteil unmittelbar in den Innenraum abgestrahlt werden, während dessen ein weiterer Anteil durch den Reflektor diffus reflektiert und anteilig in die Lichtleiterplatte eingeleitet werden kann, oder ebenfalls wiederum anteilig als Indirektanteil in den Innenraum abgestrahlt werden kann. Besonders bevorzugt ist dabei, wenn der Reflektor auf der der Unterseite zugewandten Seite des Raums angeordnet ist und weiter bevorzugt, wenn der Reflektor zwischen dem Gehäuse und der Lichtleiterplatte angeordnet ist und die Lichtleiterplatte mit der der Unterseite zugewandten zweiten Grenzfläche auf dem Reflektor aufliegt.

Darüber hinaus hat es sich als vorteilhaft erwiesen, wenn die Lichtleiterplatte wenigstens auf der der Oberseite zugewandten ersten Grenzfläche einen Reflektor umfasst, welcher besonders bevorzugt als diffus reflektierende Fläche ausgebildet ist.

Weiter bevorzugt kann der Reflektor von der ersten Grenzfläche in einer Ebene parallel und beabstandet zu der ersten Ebene abstehen, insbesondere in den Raum. Wenn das von dem LED-Linearmodul abgestrahlte Licht auf den Reflektor trifft, kann dieses durch eine diffuse Umlenkung in Richtung der ersten Öffnung auf der Oberseite reflektiert und als Indirektanteil abgestrahlt werden.

Eine weitere vorteilhafte Ausgestaltung der vorliegenden Erfindung sieht vor, dass ein Reflektor vorgesehen ist, der die Lichtleiterplatte auf der dem LED-Linearmodul zugewandten Seitekante zumindest bereichsweise umgreift, wodurch eine Einkopplung des von dem LED-Linearmodul abgestrahlten Lichts auf der dem LED-Linearmodul zugewandten Seitenkante unterdrückt ist, und der Indirektanteil des von dem LED-Linearmodul abgestrahlten Lichts weiter gesteigert ist.

Weiterhin hat es sich als vorteilhaft erwiesen, wenn der Abstand zwischen der ersten Ebene und der zweiten Ebene die Hälfte der Breite der Lichtleiterplatte umfasst, so dass das von dem LED-Linearmodul abgestrahlte Licht mindestens um einen ca. 50%igen Anteil unmittelbar als Indirektanteil abgestrahlt wird.

Eine weitere vorteilhafte Ausgestaltung der vorliegenden Erfindung sieht vor, dass in der ersten Ebene auf der ersten Seitenkante und/oder auf der zweiten Seitenkante ein zweites LED-Linearmodul angeordnet ist, und dass das von dem zweiten LED-Linearmodul abgestrahlte Licht in die wenigstens eine Lichtleiterplatte eingekoppelt ist. Das erste LED-Linearmodul und/oder das zweite LED-Linearmodul können entsprechend durch eine Steuerung betrieben werden, so dass durch die Steuerung einerseits ein Dimmen der Innenraumleuchte erfolgen kann und andererseits eine Beeinflussung des Anteils des zur indirekten Beleuchtung abgestrahlten Lichts und des Anteils des zur direkten Beleuchtung abgestrahlten Lichts erfolgen kann.

Bevorzugt ist bzw. sind die erste Öffnung und/oder die zweite Öffnung mit einer Blende verschlossen, wobei die Blende gemäß einer weiteren vorteilhaften Ausgestaltung der vorliegenden Erfindung mit einer Entblendung versehen ist, die insbesondere aus einer Vielzahl von Mikroprismen gebildet ist, wodurch eine Entblendung des abgestrahlten Lichts erfolgt. Insbesondere ist bevorzugt, wenn die Blende in der ersten Öffnung auf der Oberseite eine klare transparente Blende ist, und die Blende in der zweiten Öffnung auf der Unterseite entsprechende Mittel zur Entblendung aufweist.

Eine weitere vorteilhafte Ausgestaltung der vorliegenden Erfindung sieht vor, dass das LED-Linearmodul mindestens zwei Reihen von linear angeordneten LEDs umfasst, wobei die Reihen zueinander parallel und beabstandet angeordnet sind. Insbesondere ist bevorzugt, wenn die erste Reihe und die zweite Reihe jeweils beabstandet zu der ersten Ebene angeordnet sind, wodurch beide Reihen einen hohen Anteil an indirektem Licht abstrahlen, wobei weiter bevorzugt durch eine Steuerung sowohl die LEDs der ersten Reihe des LED-Linearmoduls als auch die LEDs der zweiten Reihe des LED-Linearmoduls angesteuert werden können. Dadurch kann der Direktanteil und der Indirektanteil gezielt eingestellt werden. Insbesondere ist es vorteilhaft, wenn die Steuerung entsprechende Bedienelemente einer Benutzerschnittstelle aufweist, wodurch das wenigstens eine LED-Linearmodul bzw. auch die LEDs in der ersten Reihe und der zweiten Reihe dimmbar sind und die Direkt- und Indirektanteile benutzerspezifisch individuell einstellbar sind.

Darüber hinaus ist es vorteilhaft, wenn das wenigstens eine LED-Linearmodul dimmbar ist und/oder einen einstellbaren Farbbereich aufweist, wodurch die erfindungsgemäße Innenraumleuchte ein an die individuellen Bedürfnisse des Innenraums bzw. des Büros angepasstes Lichtprofil abstrahlen kann.

Auch hat es sich als vorteilhaft erwiesen, wenn die Innenraumleuchte wenigstens ein mechanisches Stellglied aufweist, und dass durch das mechanische Stellglied der Abstand zwischen der Seitenkante und dem LED-Linearmodul, der Abstand zwischen der ersten Ebene und der zweiten Ebene und/oder der Winkel der zweiten Ebene einstellbar ist. Durch das mechanische Stellglied kann beim Aufstellen der Innenraumleuchte das Beleuchtungskonzept durch den Lichtingenieur festgelegt werden und durch eine mechanische Voreinstellung der Anteil des zur indirekten Beleuchtung abgestrahlten Lichts und des zur direkten Beleuchtung abgestrahlten Lichts eingestellt werden.

Nachfolgend werden unter Bezugnahme auf die begleitenden Zeichnungen zwei erfindungsgemäße Ausführungsbeispiele der vorliegenden Erfindung im Detail beschrieben. Es zeigen:
- Figur 1: eine schematische Darstellung einer ersten beispielhaften Innenraumleuchte mit einem flachen Gehäuse, und
- Figur 2: eine schematische Darstellung eines Ausführungsbeispiels der erfindungsgemäßen Innenraumleuchte mit einem auf der Lichtleiterplatte angeordneten Reflektor.

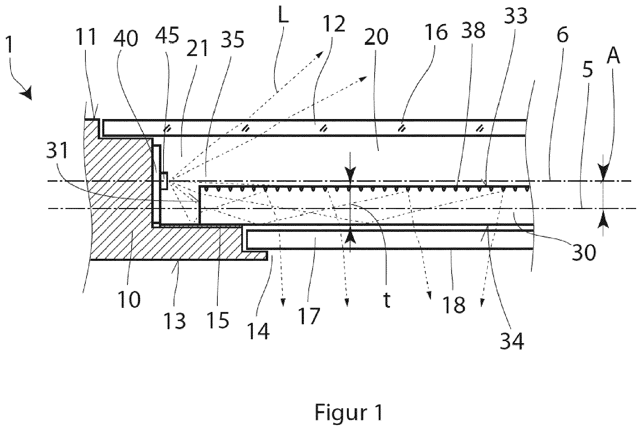

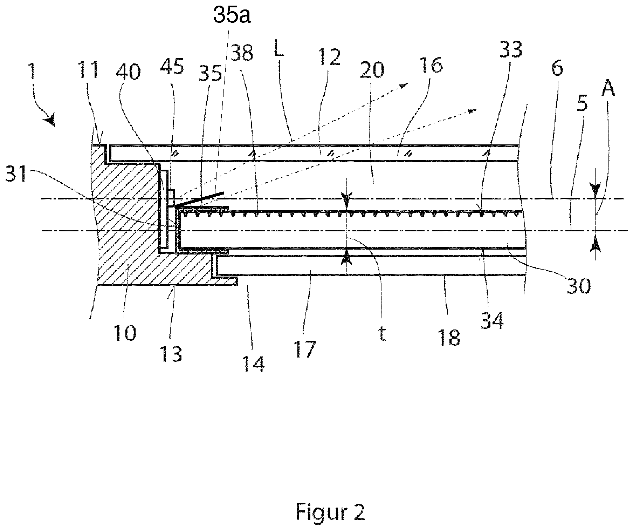

Nachfolgend werden unter Bezugnahme auf die Figuren 1 und 2 zwei bevorzugte Ausführungsbeispiele einer erfindungsgemäßen Innenraumleuchte 1 im Detail beschrieben, wobei funktional gleiche Teile mit den gleichen Bezugszeichen versehen sind. Die Merkmale der einzelnen Ausführungsbeispiele sind miteinander frei kombinierbar und nicht auf das konkrete Ausführungsbeispiel begrenzt.

Figur 1 zeigt schematisch einen Ausschnitt der erfindungsgemäßen Innenraumleuchte 1 umfassend ein Gehäuse 10, ein LED-Linearmodul 40, eine erste Blende 16 und eine zweite Blende 17.

Die Innenraumleuchte 1 gemäß den dargestellten Ausführungsbeispielen in den Figuren 1 und 2 ist bevorzugt eine Stehleuchte oder Pendelleuchte zum Beleuchten eines Innenraums, insbesondere eines Büros. Das Gehäuse 10 umfasst eine Oberseite 11 und eine Unterseite 13, wobei die Oberseite 11 im dargestellten Ausführungsbeispiel typischerweise in der vertikalen Raumrichtung nach oben gerichtet ist und die Unterseite 13 in der vertikalen Raumrichtung nach unten weist. Das Gehäuse 10 umfasst weiter eine Ausnehmung 20, die eine erste Öffnung 12 auf der Oberseite 11 bildet und eine zweite Öffnung 14 auf der Unterseite 13.

In der Ausnehmung 20 zwischen der Oberseite 11 und der Unterseite 13 ist eine Lichtleiterplatte 30 in einer ersten Ebene 5 angeordnet, die in der Ausnehmung 20 des Gehäuses 10 gehalten ist und aus einem lichtleitfähigen Kunststoff oder Glas hergestellt ist. Die Lichtleiterplatte 30 umfasst eine erste Grenzfläche 33 und eine zweite Grenzfläche 34, wobei die erste Grenzfläche 33 auf der der Oberseite 11 zugewandten Seite der Lichtleiterplatte 30 angeordnet ist und die zweite Grenzfläche 34 auf der der Unterseite 13 zugewandten Seite. Die Lichtleiterplatte 30 ist mittig auf der ersten Ebene 5, also auf der geometrischen Mitte zwischen der ersten Grenzfläche 33 und der zweiten Grenzfläche 34 angeordnet.

Beabstandet zu der ersten Seitenkante 31 ist in der Ausnehmung 20 in dem Gehäuse 10 das LED-Linearmodul 40 angeordnet, das aus einer Vielzahl von LEDs 45 gebildet ist, die in einer zweiten Ebene 6 angeordnet sind. Das LED-Linearmodul 40 strahlt bei Betrieb der Innenraumleuchte 1 das Licht in die Ausnehmung 20 in alle Raumrichtungen gleichmäßig verteilt ab, wobei das LED-Linearmodul 40 in dem dargestellten Ausführungsbeispiel derart in die Ausnehmung 20 gerichtet ist, dass eine mittlere Abstrahlrichtung des Lichts parallel zu der ersten Ebene 5 ausgerichtet ist. Diese Abstrahlrichtung entspricht der Hauptabstrahlrichtung.

Die LEDs 45 des LED-Linearmoduls 40 sind bevorzugt in der zweiten Ebene 6 äquidistant angeordnet. Zwischen dem LED-Linearmodul 40 und der Lichtleiterplatte 30 ist ein hohler Raum 21 ausgebildet, in den die LEDs 45 das Licht abstrahlen können.

Darüber hinaus ist das LED-Linearmodul 40 derart zu der Lichtleiterplatte 30 angeordnet, dass die LEDs 45 des LED-Linearmoduls 40 beabstandet zu der ersten Ebene 5 angeordnet sind. Dabei ist von besonderer Bedeutung, dass der Abstand zwischen der ersten Ebene 5 und der Oberseite 11 größer ist als der Abstand zwischen der zweiten Ebene 6 und der Oberseite 11. Demnach sind die LEDs 45 auf der der Oberseite 11 zugewandten Seite der ersten Ebene 5 angeordnet.

Weiterhin ist der Figur 1 zu entnehmen, dass die Ausnehmung 20 in dem Gehäuse 10 in einer Ebene parallel zu der ersten Ebene 5 einen Reflektor 15 aufweist. Der Reflektor 15 ist zwischen der zweiten Grenzfläche 34 und dem Gehäuse 10 angeordnet und erstreckt sich zwischen dem zu der ersten Seitenkante 31 beabstandeten LED-Linearmodul 40 und der Lichtleiterplatte 30, wobei der Reflektor 15 teilweise die zweite Grenzfläche 34 in einem Überlappungsbereich bedeckt. Der Überlappungsbereich kann beispielsweise der Größe der Auflagefläche der Lichtleiterplatte 30 in der Ausnehmung 20 in dem Gehäuse 10 entsprechen.

Der Reflektor 15 kann als diffus reflektierender Reflektor 15 ausgebildet sein, wodurch das von dem LED-Linearmodul 40 abgestrahlte Licht einerseits unmittelbar als Indirektanteil durch die erste Öffnung 12 zur indirekten Beleuchtung in den Innenraum abgestrahlt werden kann und andererseits über den Reflektor 15 anteilig ebenfalls als Indirektanteil durch die erste Öffnung 12 zur indirekten Beleuchtung in den Innenraum abgestrahlt werden kann. Ein verbleibender Anteil wird unmittelbar oder mittelbar über den Reflektor 15 in die Lichtleiterplatte 30 eingekoppelt.

Der Abstand in dem dargestellten Ausführungsbeispiel zwischen der ersten Seitenkante 31 und dem LED-Linearmodul 40 bzw. den LEDs 45, kann vorzugsweise ca. 4 bis 5 mm betragen,
Der Abstand zwischen der wenigstens einen Seitenkante 31, 32 der Lichtleiterplatte und dem LED-Linearmodul kann bezogen auf die Dicke t der Lichtleiterplatte 30 zwischen t/4 und 10t und mehr betragen, wobei bevorzugt der Abstand zwischen t/2 und 5t beträgt.

Im vorliegenden Ausführungsbeispiel beträgt der Abstand A zwischen der ersten Ebene 5 und der zweiten Ebene 6 ca. die Hälfte der Dicke t der Lichtleiterplatte 30 also A≈ t/2 , wobei der Abstand A sowohl beliebig größer, also A≥ t/2 als auch geringfügig kleiner, also 0 < A ≤ t/2 gewählt werden kann, um den Anteil des zur indirekten Beleuchtung abgestrahlten Lichts einzustellen.

Darüber hinaus kann auf einer nicht dargestellten zweiten Seitenkante, die der ersten Seitenkante 31 in der ersten Ebene 5 gegenüberliegt, ein zweites LED-Linearmodul 40 angeordnet sein, dessen LEDs 45 in der ersten Ebene 5 angeordnet sind. Durch eine nicht dargestellte Steuerung der Innenraumleuchte können das erste LED-Linearmodul 40 und das zweite LED-Linearmodul entsprechend angesteuert werden, um den Anteil des zur direkten Beleuchtung abgestrahlten Lichts und den Anteil des zur indirekten Beleuchtung abgestrahlten Lichts festzulegen.

Darüber hinaus ist der Figur 1 zu entnehmen, dass auf der der Oberseite 11 zugewandten Seite der Lichtleiterplatte 30, also im Bereich der ersten Grenzfläche 33, in die Lichtleiterplatte 30 eine Auskopplungsstruktur 38 eingearbeitet oder eingeformt ist, durch die die Totalreflexion des abgestrahlten Lichts an der ersten Grenzfläche 33 unterbrochen ist. Das Licht wird an diesen Auskopplungsstrukturen 38 entweder durch eine Lichtbrechnung unmittelbar ausgekoppelt oder durch eine entsprechende Reflexion, durch die die Bedingungen der Totalreflexion auf der zweiten Grenzfläche 34 der Lichtleiterplatte 30 unterbrochen sind, ausgekoppelt und somit kann dieses Licht als Direktanteil durch die zweite Öffnung 14 abgestrahlt werden.

Darüber hinaus umfasst die zweite Blende 17 mindestens eine Entblendung, welche beispielsweise aus einer Vielzahl von Prismen gebildet ist, insbesondere Mikroprismen 18. Durch die Entblendung wird das durch die zweite Blende 17 durchtretende Licht im Wesentlichen innerhalb eines definierten Raumwinkelbereichs in den Innenraum bzw. das Büro mit homogener Leuchtdichteverteilung an der zweiten Öffnung 14 abgestrahlt.

Die erste Blende 16 auf der Oberseite 11 ist dagegen transparent und bevorzugt zu Reinigungszwecken aus einem pflegeleichten Werkstoff hergestellt. Die erste Blende 16 ist im Wesentlichen dazu eingerichtet, die Ausnehmung 20 vor Verschmutzungen, insbesondere Staub zu schützen, durch welchen der Direktanteil des zur Beleuchtung abgestrahlten Lichts und der Indirektanteil des zur Beleuchtung abgestrahlten Lichts beeinflusst werden kann.

Das zweite Ausführungsbeispiel gemäß Figur 2 unterscheidet sich im Wesentlichen dadurch, dass ein Reflektor 35 auf der Lichtleiterplatte 30 angeordnet ist und auf den Reflektor 15 der Ausnehmung 20 bzw. im Raum 21 in dem Gehäuse 10 verzichtet werden kann. Der Reflektor 35 umgreift die dem LED-Linearmodul 40 zugewandte erste Seitenkante 31 der Lichtleiterplatte 30 U-förmig mit einem oberen Längsschenkel, der unmittelbar auf der ersten Grenzfläche 33 der Lichtleiterplatte 30 aufliegt und einem unteren Längsschenkel, der auf der zweiten Grenzfläche 34 aufliegt und wobei beide Längsschenkel über einen Querschenkel an der Stirnseite der Lichtleiterplatte 30 verbunden sind.

Gemäß der Erfindung ist aber der Reflektor 35 mit einem schräg nach oben geneigten oberen Längsschenkel 35a vorgesehen, wie dies ebenfalls in Figur 2 mit dem durchgezogenen oberen Längsschenkel angedeutet ist. Zur Ebene 15 kann dieser obere Längsschenkel beispielsweise um etwa 17 Grad geneigt sein, um die Lichtverteilung des Indirektanteils des Lichts zu optimieren.

Das LED-Linearmodul 40 ist unmittelbar benachbart zu der ersten Seitenkante 31 angeordnet, und die der Unterseite 13 zugewandte Seite der LEDs 45 ist annähernd fluchtend zu der ersten Grenzfläche 33 der Lichtleiterplatte 30 ausgerichtet. Demnach ist die zweite Ebene 6 oberhalb der Lichtleiterplatte 30 oder zumindest fluchtend zu der ersten Grenzfläche 33 der Lichtleiterplatte 30 angeordnet.

Das von dem LED-Linearmodul 40 abgestrahlte Licht wird demnach zu einem besonders großen Anteil entweder unmittelbar durch die erste Öffnung 12 auf der Oberseite 11 und durch Reflexion durch den Reflektor 35 auf der Lichtleiterplatte 30 zur indirekten Beleuchtung abgestrahlt. Lediglich ein geringer Anteil des von dem LED-Linearmodul 40 abgestrahlten Lichts, der unmittelbar auf die erste Grenzfläche 33 der Lichtleiterplatte 30 trifft, ist anteilig durch die Auskopplungsstruktur 38 im Bereich der ersten Grenzfläche 33 in die Lichtleiterplatte 30 eingekoppelt und wird als Licht zur direkten Beleuchtung des Innenraums abgestrahlt.

Es versteht sich von selbst, dass die in den Figuren 1 und 2 dargestellten Ausführungsbeispiele miteinander kombinierbar sind, und auch die als optional dargelegten Merkmale frei miteinander kombiniert werden können. Insbesondere können die LED-Linearmodule 40 eine oder mehrere Reihen von LEDs 45 aufweisen, die parallel und beabstandet zueinander angeordnet sind. Durch eine entsprechende Steuerung können die LEDs 45 derart betrieben werden, dass der zur indirekten Beleuchtung abgestrahlte Anteil und der zur direkten Beleuchtung abgestrahlte Anteil nach Belieben des Anwenders eingestellt werden kann. Insbesondere können die LEDs 45auch als RGB-LED ausgebildet sein, wodurch das von den LEDs 45 abgestrahlte Licht das gesamte Farbspektrum abdecken kann. Somit kann die erfindungsgemäße Innenraumleuchte 1 den individuellen Bedürfnissen des Anwenders gerecht werden und im Gegensatz zu den aus dem Stand der Technik bekannten Innenraumleuchten einen besonders hohen Anteil an indirektem Licht aufweisen.

### Bezugszeichenliste

- 1: Innenraumleuchte
- 5: erste Ebene
- 6: zweite Ebene
- 10: Gehäuse
- 11: Oberseite
- 12: erste Öffnung
- 13: Unterseite
- 14: zweite Öffnung
- 15: Reflektor
- 16: Blende in 12
- 17: Blende in 14
- 18: Prisma
- 20: Ausnehmung
- 21: Raum
- 30: Lichtleiterplatte
- 31: erste Seitenkante
- 33: erste Grenzfläche
- 34: zweite Grenzfläche
- 35: Reflektor
- 35a: Reflektor mit geneigtem Längsschenkel
- 38: Auskopplungsstruktur
- 40: LED-Linearmodul
- 45: LED

## Patentansprüche

1. Innenraumleuchte (1), insbesondere Büroleuchte, umfassend ein Gehäuse (10) mit einer Ausnehmung (20), in der wenigstens ein LED-Linearmodul (40), und wenigstens eine Lichtleiterplatte (30), aufweisend wenigstens eine Seitenkante (31, 32) und zwei Grenzflächen (33, 34), angeordnet sind,
- wobei das LED-Linearmodul (40) eingerichtet ist, Licht in die Ausnehmung (20) abzustrahlen,
- wobei die Ausnehmung (20) eine erste lichtdurchlässige Öffnung (12) zur indirekten Beleuchtung auf einer Oberseite (11) und eine zweite lichtdurchlässige Öffnung (14) zur direkten Beleuchtung auf einer Unterseite (13) aufweist,
- wobei die Lichtleiterplatte (30) zwischen der ersten Öffnung (12) und der zweiten Öffnung (14) in einer ersten Ebene (5) angeordnet ist,
- wobei das wenigstens eine LED-Linearmodul (40) beabstandet zu der wenigstens einen Seitenkante (31, 32) der Lichtleiterplatte (30) und/oder in einer zweiten Ebene (6) beabstandet zu der ersten Ebene (5) angeordnet ist und das Licht in die Ausnehmung (20) abstrahlt, und
- wobei eine mittlere Abstrahlrichtung des Lichts parallel zu der ersten Ebene (5) ausgerichtet ist,
- **dadurch gekennzeichnet, dass** ein Reflektor (35) die Lichtleiterplatte (30) auf der dem LED-Linearmodul (40) zugewandten Seitenkante (31) mit einem oberen Längsschenkel (35a), einen unteren Längsschenkel, der auf der zweiten Grenzfläche (34) aufliegt und einen Querschenkel an der Stirnseite der Lichtleiterplatte zumindest bereichsweise umgreift, und
- der obere Längsschenkel (35a) schräg nach oben geneigt ist.

2. Innenraumleuchte (1) nach Anspruch 1,
**dadurch gekennzeichnet, dass** das wenigstens eine LED-Linearmodul (40) beabstandet zu der wenigstens einen Seitenkante (31, 32) der Lichtleiterplatte (30) angeordnet ist und das Licht in die Ausnehmung (20) abstrahlt.

3. Innenraumleuchte (1) nach Anspruch 1 oder 2,
**dadurch gekennzeichnet, dass** die Lichtleiterplatte (30) eine Auskopplungsstruktur (38) umfasst.

4. Innenraumleuchte (1) nach einem der Ansprüche 1, 2 oder 3,
**dadurch gekennzeichnet, dass**
das LED-Linearmodul (40) in der ersten Ebene (5) beabstandet zu der Lichtleiterplatte (30) angeordnet ist.

5. Innenraumleuchte (1) nach einem der vorgenannten Ansprüche,
**dadurch gekennzeichnet, dass**
der obere Längsschenkel zur Ebene (15) um etwa 17 Grad geneigt ist.

6. Innenraumleuchte (1) nach einem der vorgenannten Ansprüche,
**dadurch gekennzeichnet, dass** der Abstand (A) zwischen der ersten Ebene (5) und der zweiten Ebene (6) mindestens die Hälfte der Breite (t) der Lichtleiterplatte (30) beträgt.

7. Innenraumleuchte (1) nach einem der vorgenannten Ansprüche,
**dadurch gekennzeichnet, dass**
in der ersten Ebene (5) auf der ersten Seitenkante (31) und/oder auf der zweiten Seitenkante (32) ein zweites LED-Linearmodul (40) angeordnet ist, und dass das abgestrahlte Licht in die wenigstens eine Lichtleiterplatte (30) eingekoppelt ist.

8. Innenraumleuchte (1) nach einem der vorgenannten Ansprüche,
**dadurch gekennzeichnet, dass**
das LED-Linearmodul (40) beabstandet zu der Lichtleiterplatte (30) angeordnet ist.

9. Innenraumleuchte (1) nach einem der vorgenannten Ansprüche,
**dadurch gekennzeichnet, dass**
der Abstand zwischen der ersten Öffnung (12) und der Lichtleiterplatte (30) größer ist als der Abstand zwischen der zweiten Öffnung (14) und der Lichtleiterplatte (30).

10. Innenraumleuchte (1) nach einem der vorgenannten Ansprüche,
**dadurch gekennzeichnet, dass**
die erste Öffnung (12) und/oder die zweite Öffnung (14) mit einer Blende (16, 17) verschlossen ist bzw. sind.

11. Innenraumleuchte (1) nach einem der vorgenannten Ansprüche,
**dadurch gekennzeichnet, dass**
die Blende (16, 17) mit Prismen (18), insbesondere Mikroprismen, versehen ist.

12. Innenraumleuchte (1) nach einem der vorgenannten Ansprüche,
**dadurch gekennzeichnet, dass**
das LED-Linearmodul (40) mindestens zwei Reihen von linear angeordneten LEDs (45) umfasst, wobei die Reihen zueinander parallel und beabstandet angeordnet sind.

13. Innenraumleuchte (1) nach Anspruch 12 **dadurch gekennzeichnet, dass**
die mindestens zwei Reihen von linear angeordneten LEDs (45) durch eine Steuerung angesprochen werden können.

14. Innenraumleuchte (1) nach einem der vorgenannten Ansprüche, **dadurch gekennzeichnet, dass** das wenigstens eine LED-Linearmodul (40) dimmbar ist.

15. Innenraumleuchte (1) nach einem der vorgenannten Ansprüche,
**dadurch gekennzeichnet, dass** ein mechanisches Stellglied vorgesehen ist und dass durch das mechanische Stellglied der Abstand (A) zwischen der ersten Ebene (5) und der zweiten Ebene (6) einstellbar ist.

## Claims

1. Interior room lamp (1), in particular an office lamp, including a housing (10) with a cavity (20) in which at least one LED linear module (40) and at least one light guide plate (30) comprising at least one side edge (31, 32) and two boundary surfaces (33, 34) are disposed,
- wherein the LED linear module (40) is designed to radiate light into the cavity (20),
- wherein the cavity (20) has a first translucent opening (12) for indirect lighting on an upper side (11) and a second translucent opening (14) for indirect lighting on a lower side (13),
- wherein the light guide plate (30) is arranged between the first opening (12) and the second opening (14) in a first plane (5),
- wherein the at least one LED linear module (40) is arranged at a distance to the at least one side edge (31, 32) of the light guide plate (30) and/or in a second plane (6) at a distance to the first plane (5) and radiates the light into the cavity (20), and
- wherein a medium radiating direction of the light is aligned parallel to the first plane (5),
- **characterized in that** a reflector (35) engages at least partially around the light guide plate (30) on the side edge (31) facing the LED linear module (40) with an upper longitudinal limb (35a), a lower longitudinal limb that rests on the second boundary surface (34) and a transverse limb on the end face of the light guide plate (30), and
- the upper longitudinal limb (35a) is inclined obliquely upwards.

2. Interior room lamp (1) in accordance with claim 1
**characterized in that** the at least one LED linear module (40) is arranged at a distance to that at least one side edge (31, 32) of the light guide plate (30) and radiates the light into the cavity (20).

3. Interior room lamp (1) in accordance with claim 1 or 2,
**characterized in that** the light guide plate (30) comprises a decoupling structure (38).

4. Interior room lamp (1) in accordance with claim 1, 2 or 3,
**characterized in that** the LED linear module (40) is arranged in the first plane (5) at a distance to the light guide plate (30).

5. Interior room lamp (1) in accordance with any of the preceding claims,
**characterized in that** the upper longitudinal limb is inclined toward the plane (15) at approximately 17 degrees.

6. Interior room lamp (1) in accordance with any of the preceding claims,
**characterized in that** the distance (A) between the first plane (5) and the second plane (6) equals at least one half of the width (t) of the light guide plate (30).

7. Interior room lamp (1) in accordance with any of the preceding claims,
**characterized in that** a second LED linear module (40) is arranged in the first plane (5) on the first side edge (31) and/or on the second side edge (32) and **in that** the radiated light is injected into the at least one light guide plate (30).

8. Interior room lamp (1) in accordance with any of the preceding claims,
**characterized in that** the LED linear module (40) is arranged at a distance to the light guide plate (30).

9. Interior room lamp (1) in accordance with any of the preceding claims,
**characterized in that** the distance between the first opening (12) and the light guide plate (30) is larger than the distance between the second opening (14) and the light guide plate (30).

10. Interior room lamp (1) in accordance with any of the preceding claims,
**characterized in that** the first opening (12) and/or the second opening (14) is(are) closed with a shutter (16, 17).

11. Interior room lamp (1) in accordance with any of the preceding claims,
**characterized in that** the shutter (16, 17) is provided with prisms (18), in particular with microprisms.

12. Interior room lamp (1) in accordance with any of the preceding claims,
**characterized in that** the LED linear module (40) comprises at least two rows of linearly arranged LEDs (45), wherein the rows are arranged parallel and at a distance to each other.

13. Interior room lamp (1) in accordance with claim 12,
**characterized in that** the at least two rows of linearly arranged LEDs are responsive to a controller.

14. Interior room lamp (1) in accordance with any of the preceding claims,
**characterized in that** the at least one LED linear module (40) is dimmable.

15. Interior room lamp (1) in accordance with any of the preceding claims,
**characterized in that** a mechanical adjustment member is provided and **in that** the distance (A) between the first plane (5) and the second plane (6) is adjustable.

## Revendications

1. Lampe d'intérieur (1), notamment lampe de bureau comprenant un boîtier (10) avec une cavité (20) recevant au moins un module linéaire LED (40) et au moins une plaque guide de lumière (30) ayant au moins une arête latérale (31, 32) et deux surfaces limites (33, 34),
- le module linéaire LED (40) est conçu pour rayonner la lumière dans la cavité (20),
- la cavité (20) comporte une première ouverture transparente (12) pour l'éclairage indirect du côté supérieur (11) et une seconde ouverture transparente (14) pour l'éclairage direct du côté inférieur (13),
- la plaque guide de lumière (30) étant située entre la première ouverture (12) et la seconde ouverture (14) dans un premier plan (5),
- au moins un module linéaire LED (40) est disposé de façon écartée par rapport à au moins une arête latérale (31, 32) de la plaque guide de lumière (30) et/ou dans un second plan (6) écarté du premier plan (5) et il rayonne la lumière dans la cavité (20), et
- la direction moyenne de rayonnement de la lumière est parallèle au premier plan (5),
lampe **caractérisée en ce que**
- un réflecteur (35) entoure au moins en partie la plaque guide de lumière (30) sur l'arête latérale (31) tournée vers le module linéaire LED (40) avec une branche longitudinale supérieure (35a), une branche longitudinale inférieure appliquée sur la seconde surface limite (34) et une branche transversale contre la face frontale de la plaque guide de lumière, et
- la branche longitudinale supérieure (35a) est relevée en biais.

2. Lampe d'intérieur (1) selon la revendication 1,
**caractérisée en ce que**
le module linéaire LED (40) est écarté d'au moins une arête latérale (31, 32) de la plaque guide de lumière (30) et il rayonne la lumière dans la cavité (20).

3. Lampe d'intérieur (1) selon la revendication 1 ou 2,
**caractérisée en ce que**
la plaque guide de lumière (30) a une structure de découplage (38).

4. Lampe d'intérieur (1) selon l'une des revendications 1, 2 ou 3,
**caractérisée en ce que**
le module linéaire LED (40) est disposé dans le premier plan (5) écarté de la plaque guide de lumière (30).

5. Lampe d'intérieur (1) selon l'une des revendications précédentes,
**caractérisée en ce que**
la branche longitudinale supérieure est inclinée d'environ 17 degrés par rapport au plan (5).

6. Lampe d'intérieur (1) selon l'une des revendications précédentes,
**caractérisée en ce que**
la distance (A) entre le premier plan (5) et le second plan (6) correspond au moins à la moitié de la largeur (t) de la plaque guide de lumière (30).

7. Lampe d'intérieur (1) selon l'une des revendications précédentes,
**caractérisée en ce que**
un second module linéaire LED (40) est prévu dans le premier plan (5) sur la première arête latérale (31) et/ou la seconde arête latérale (32) et la lumière rayonnée est couplée dans au moins une plaque guide de lumière (30).

8. Lampe d'intérieur (1) selon l'une des revendications précédentes,
**caractérisée en ce que**
le module linéaire LED (40) est écarté de la plaque guide de lumière (30).

9. Lampe d'intérieur (1) selon l'une des revendications précédentes,
**caractérisée en ce que**
la distance entre la première ouverture (12) et la plaque guide de lumière (30) est plus grande que la distance entre la seconde ouverture (14) et la plaque guide de lumière (30).

10. Lampe d'intérieur (1) selon l'une des revendications précédentes,
**caractérisée en ce que**
la première ouverture (12) et/ou la seconde ouverture (14) sont fermées par un écran (16, 17).

11. Lampe d'intérieur (1) selon l'une des revendications précédentes,
**caractérisée en ce que**
l'écran (16, 17) est muni de prismes (18), notamment de micro-prismes.

12. Lampe d'intérieur (1) selon l'une des revendications précédentes,
**caractérisée en ce que**
le module linéaire LED (40) comporte au moins deux rangées de diodes LED (45) disposées de façon linéaire, les rangées étant parallèles et écartées.

13. Lampe d'intérieur (1) selon la revendication 12,
**caractérisée en ce que**
au moins deux rangées de diodes LED disposées (45) de façon linéaire sont activées par une commande.

14. Lampe d'intérieur (1) selon l'une des revendications précédentes,
**caractérisée en ce que**
au moins un module linéaire LED (40) est dimmable.

15. Lampe d'intérieur (1) selon l'une des revendications précédentes,
**caractérisée en ce qu'**il comporte
un organe mécanique de réglage et cet organe mécanique de réglage règle la distance (A) entre le premier plan (5) et le second plan (6).
